# EUROPEAN PATENT APPLICATION

(11) **EP 1 038 803 A1**
(43) Date of publication of application: **27.09.2000**
(21) Application number: 00302475.9
(22) Date of filing: 27.03.2000
(51) Int. Cl.: B65F 1/12, B65F 1/16

(54) **Wheeled waste container**

(30) Priority: 25.03.1999 GB 9906779
(71) Applicant: Egbert H. Taylor & Company Limited, Elmley Lovett, WR9 0QZ Worcestershire (GB)
(72) Inventor: Taylor, Adair Egbert Avon Lloyd, Elmley Lovett, Worcestershire WR9 0QZ (GB); Lowe, Peter, Brierley Hill, W. Midlands. DY5 3RF (GB); Walls, Kevin Oliver, Harley Goodacre, Worcester. WR4 0PW (GB); Pugh, Damen James, Stourport-on-Severn, Worth. DY13 8SP (GB)
(74) Representative: Chettle, Adrian John

(57) **Abstract**

A wheeled waste container (10) comprises an open bin (11) of plastics and a reinforcement hoop (12) of metal around the mouth thereof to which is attached a lifting formation, such as a comb bar (13). The hoop (12) is preferably of two-part construction, having one part extending between hinges (35) for a lid (44).

## Description

This application relates to a container, and particularly to a wheeled container for domestic and commercial refuse.

Many kinds of wheeled containers are known, and which are suitable for domestic and commercial waste. Such containers are usually too large to be lifted manually, and accordingly have means by which a mechanism of a refuse vehicle can lift the container for emptying therein.

The smaller two and four wheeled containers usually have a so-called comb bar along one edge of the opening, whilst larger containers may have a comb bar and/or trunnions at opposite sides thereof. Many other kinds of lifting formations have been proposed.

The smaller and medium sized containers are often of plastic, the comb bar being integrally moulded to the front wall. Such containers are subject to impact and stress damage, and are difficult to repair without specialist equipment. Moulds for such containers are, of course, rather expensive, and the container must be made of a high grade plastic in order to meet the structural requirements associated with the lifting formation. Typically such containers are injection moulded of a high grade plastics. Injection moulding is necessary in order to produce the rather complex shape, but tooling for such large mouldings is expensive. Furthermore, an injection moulding is not stress free because of differential cooling resulting from the spaced apart injection locations. Such built-in stresses must be carefully managed in order that lifting stresses do not combine in use to cause fracture or damage to the moulding. A further disadvantage of such containers is that they are not fire resistant: on the other hand such containers require no corrosion protection, and can be self-coloured.

Other types of container are of steel, and are usually fabricated by welding from a number of components. Such containers can usually be repaired by conventional welding equipment, and the repair is normally wholly successful unlike the somewhat problematic repair of plastic containers. Steel containers are rather expensive to produce since they have a high labour content; furthermore corrosion protection is usually necessary, by galvanizing, and painting may be required.

What is required is a container which provides most of the advantages of both plastic and steel containers, whilst eliminating most of the disadvantages.

According to the invention there is provided a composite container comprising an open bin of plastics material, a hoop of metal around the mouth thereof, and a lifting formation of the container on said hoop. Preferably the hoop is of steel, but alternative materials such as glass or carbon reinforced plastic may be suitable.

Owing to the fact that the lifting formation is provided on the hoop, the bin can be of a grade of plastic which is adequate to contain the payload thereof, and to support wheels and other attachments. Such attachments may, of course, include load-spreading means and local reinforcement such as steel plates. The bin can be self-coloured.

The bin is preferably formed as a rotational moulding. The advantage of a rotational moulding is that there are no inherent stresses as a result of the moulding operation. Furthermore mould tooling is inexpensive as compared with injection moulding.

The hoop provides reinforcement in the area of the mouth where additional strength is required, and also provides a mounting for the lifting formation which distributes loads around the circumference of the container. The hoop is typically relatively narrow, and can be galvanized, but need not be painted.

Preferably the hoop is external, in which case a bright galvanized hoop is aesthetically pleasing. If necessary an external hoop can however be hidden, at least in part, by an overlapping rim of a container lid.

The hoop may be attached or assembled to the container by any suitable means.

Preferably the container includes an external rim around the edge thereof, and under which the hoop engages. This arrangement spreads the lifting load on the hoop over the entire periphery of the bin by simple abutment. The bin may define a substantially continuous peripheral recess in the vicinity of the mouth, and into which the hoop can be engaged. In the case of a one piece construction, the hoop may be engaged in the recess in the manner of a snap fitting.

Alternatively the bin may define a plurality of spaced abutments each having a tapered leading edge, and over which the hop can be snap-fitted for engagement with an upper bin abutment, for example an external rim.

Advantageously the side walls of the bin taper inwardly toward the bottom, thus facilitating fitting of the hoop from below, and ensuring easy emptying when the container is upended,

Handles for manoeuvring the container may also be attached to the hoop; this also has the advantage of spreading manoeuvring loads via the hoop whilst placing structural components on a single hoop assembly.

The hoop may be formed as a continuous ring, for example by welding, or may be formed as a broken ring with flanged ends to be closed by a suitable fastener. A two-part ring is provided in a preferred embodiment. The joins may coincide with hinge points of a lid; this arrangement allows very convenient assembly of hinge plates, and facilitates adjustment of the size of the hoop.

A further advantage of the hoop reinforcement is that the lifting formations, handles and other attachments provide a degree of crash protection against walls and the like, thus preserving the appearance and condition of the plastic bin.

A container according to the invention is not fire resistant. However, replacement of the bin moulding is relative inexpensive and easy, the hoop being simply removed from an old bin carcass and refitted to a new carcass. In this way bins can be repaired and refurbished at relatively low cost, the hoop components seldom being damaged themselves.

The bin itself is relatively straightforward to mould since it does not require the complex detail associated with an integral comb bar, or the relatively high grade of plastic which may be necessary for the structural integrity of a wholly plastic container.

In a preferred embodiment fasteners are provided to attach the hoop to the bin. It is preferred that lifting loads are transmitted by direct abutment of the hoop to the bin, whilst the fasteners merely serve to retain the hoop in position.

Another advantage of a hoop is that thermal expansion of the bin is controlled, and fasteners may provided additional resistance to distortion of the bin wall under extremes of temperature.

In cases where the bin has an external rim, the hoop does not interfere with smooth loading and discharge of refuse; accordingly such a hoop does not trap refuse or otherwise present an edge or surface likely to catch or injure a user of the container. The rim may have a down turned edge to partially enclose the hoop.

In a preferred embodiment the hoop includes a comb bar at one side thereof, the comb bar having a depending bumper adapted to engage the comb of lifting apparatus. The bumper may for example be a continuous strip of for example steel, extending across the comb bar and having a depth sufficient to engage a comb prior to upward lifting movement of the comb.

Such a bumper is particularly advantageous in both preventing contact damage to the bin, and in preventing inward bulging of the bin wall between fixings of the hoop, which may in turn lead to engagement of the comb with the lower edge of the bumper or comb bar rather than the comb bar itself.

The bin may include a recess for the bumper so as to give a flush surface.

The hoop preferably has a somewhat serpentine profile to improve stiffness thereof. such a profile can have the additional advantage of providing an indication of orientation and a register for attachment of components thereto. Another advantage of the serpentine profile is that concave portions thereof permit the introduction of additional stiffening elements, such as tubes or rods. In one embodiment a stiffening rod may extend around the hoop on the inside thereof. In cases where one or more stiffening elements is introduced, the thickness of the serpentine profile may be reduced for a given stiffness or strength.

According to a second aspect there is provided a hoop for a waste container, the hoop being of the kind described above. The hoop may not include a lifting formation, but may be for the sole purpose of reinforcement of the mouth of the bin. Lifting formations, such as side mounted trunnions may be attached to the bin by any suitable means, and include reinforcement plates.

According to a third aspect there is provided a container comprising an open bin, and a lid hinged to the mouth of the bin, the waste container further including a treadle mechanism to permit partial opening of the lid by foot actuation, wherein the treadle bar extends along a lower edge of the bin and is pivoted about the underside thereof, said lower edge of the bin being angled to permit an increased treadle stroke.

Typically the base of the bin will be generally at right angles to the side in order to maximise capacity. Furthermore, the base of the bin will be close to the ground in order to maximise capacity whilst having a reasonable loading height. Accordingly, the available treadle stroke is limited, but can be increased by arranging for the base and side in the region of the treadle to be angled so as to enable the treadle bar to have a relatively high start position. The lower limit of treadle movement is of course defined by the ground.

According to a fourth aspect there is provided a rectangular container comprising an open bin and having a front edge adapted for loading and emptying thereof, the container having opposed sides defining a generally vertical blind recess therein, said recess extending from the base of the container to about mid-height thereof. Such a recess defines a convenient integral handhold at the upper edge thereof which may eliminate the need for separate external handles. The recess may extend over about one third of the width of the container.

The container may be fitted with a treadle operated lid, the connecting rod of which is preferably housed in said recess. This arrangement protects the connecting rod from contact damage whilst avoiding piercing of the container body in the lower region thereof, which might lead to leakage of liquid watse.

According to a fifth aspect there is provided a plastics body for a wheeled container, the body comprising an open bin having an outer layer, and an inner layer, said layers having contrasting colours.

Such a bin has the advantage that the amount of colour pigment is proportional to the relative thickness of the inner and outer layer, yet the inner and outer layers together contribute to the strength of the body. The exterior of the bin may thus be colour customised for the end user.

Preferably the body is manufactured using a rotational moulding technique having a multi-stage release of the plastic charge.

In a preferred embodiment, the inner layer includes one or all of a slip promoting additive (such as PTFE), an anti-bacterial additive, a scratch reducing additive, and a perfume additive. This arrangement has the advantage that the additive is not provided to both layers, and thus the cost of treatment is less than if the additive extended through the entire wall thickness. The additive may be in the form of an addition to the plastic charge, or as a layer applied on or through the surface of the inner layer. The outer layer may include any desired additive, such as a scratch reducing additive.

The inner layer is preferably black, having preferably carbon black as the pigment.

The ratio of thickness of inner to outer layer is preferably not less that 1:8 and not more that 8:1. Thin outer and inner layers may sandwich a middle layer having no colour or other additive.

Typically a charge of 30kg coloured powder forms the outer layer, and a charge of 5kg black powder forms the inner layer. The inner and outer layers are preferably the same plastic material so as to ensure fusing of the inner and outer layers.

According to a sixth aspect, there is provided a container for waste, and having a hinged lid, and a lever arrangement mounted to the container for lifting the lid, the lever arrangement comprising a treadle, a lifting rod connected to the treadle of the container at a lower end and pivoted to a lifting lever at an upper end, the lifting lever having a slot extending longitudinally thereof and guided on a fixed projection of said container, the fixed projection being on one side of the upper end of said lifting rod and an abutment of said lever extending on the other side of said lifting rod such that raising of said lifting rod results in pivoting of said lever around said fixed projection, and sliding of said lever along said fixed projection, the lever abutment raising a lid of said container in use.

Preferably the lever is mounted on the inside of said container. Preferably the abutment of said lever is between said lifting rod and the hinge of said lid. Preferably said lifting rod is between the hinge of said lid and said fixed projection.

Other features of the invention will be apparent from several preferred embodiments shown by way of example only in the accompanying drawings in which:-
Figure 1 illustrates a perspective view of a first container according to the invention;
Figure 2 shows a reinforcement hoop of the embodiment of Figure 1;
Figure 3 is a scrap section showing the upper region of the container;
Figure 4 is a scrap elevation showing a positioning projection;
Figure 5 illustrates an alternative container having side trunnions;
Figure 6 shows the reinforcement hoop of the embodiment of Figure 5; Figure illustrates part of a hoop in plan;
Figure 8 illustrates the side elevation of an alternative embodiment of the invention;
Figure 9 is a partial transverse section on line 9-9 of Figure 8;
Figure 10 is a cross section through a typical hoop according to the invention and on an enlarged scale;
Figure 11 illustrates a typical cheek plate:
Figure 12 shows an alternative trunnion mounting for use with the invention;
Figure 13 shows a partial cross-section through the front upper edge of a container according to the invention, and having a bumper.
Figure 14 is a scrap section through a container according to the invention and moulded in two layers.
Fig.15 is a scrap elevation showing a lid lifting arrangement in the closed condition; and
Fig. 16 corresponds to Fig. 15 and shows the arrangement in the open condition.

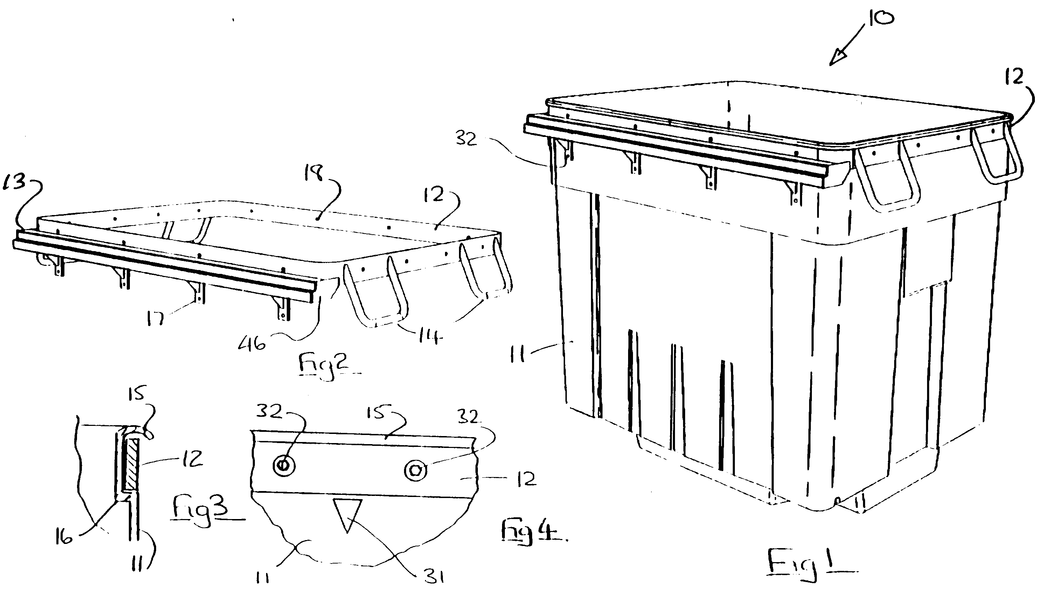

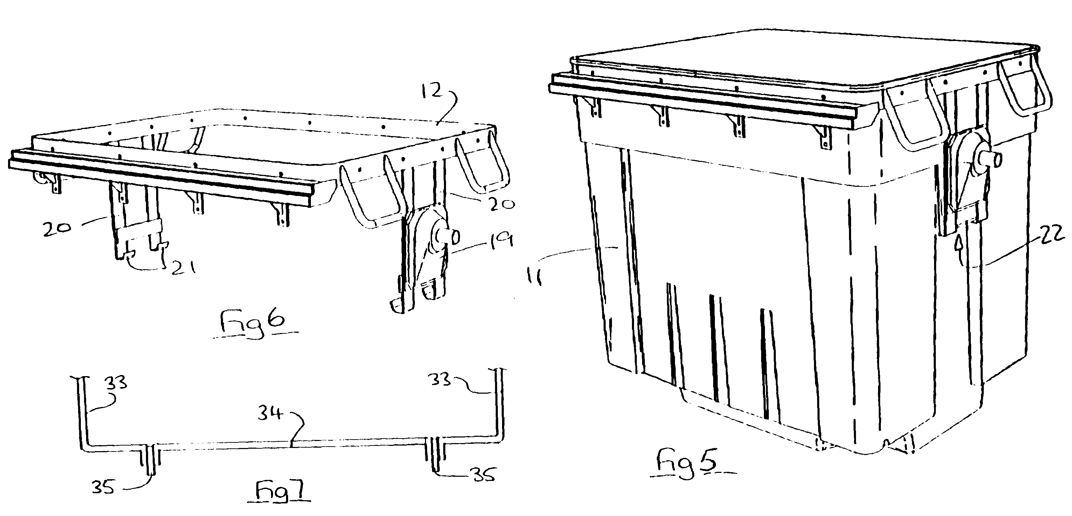

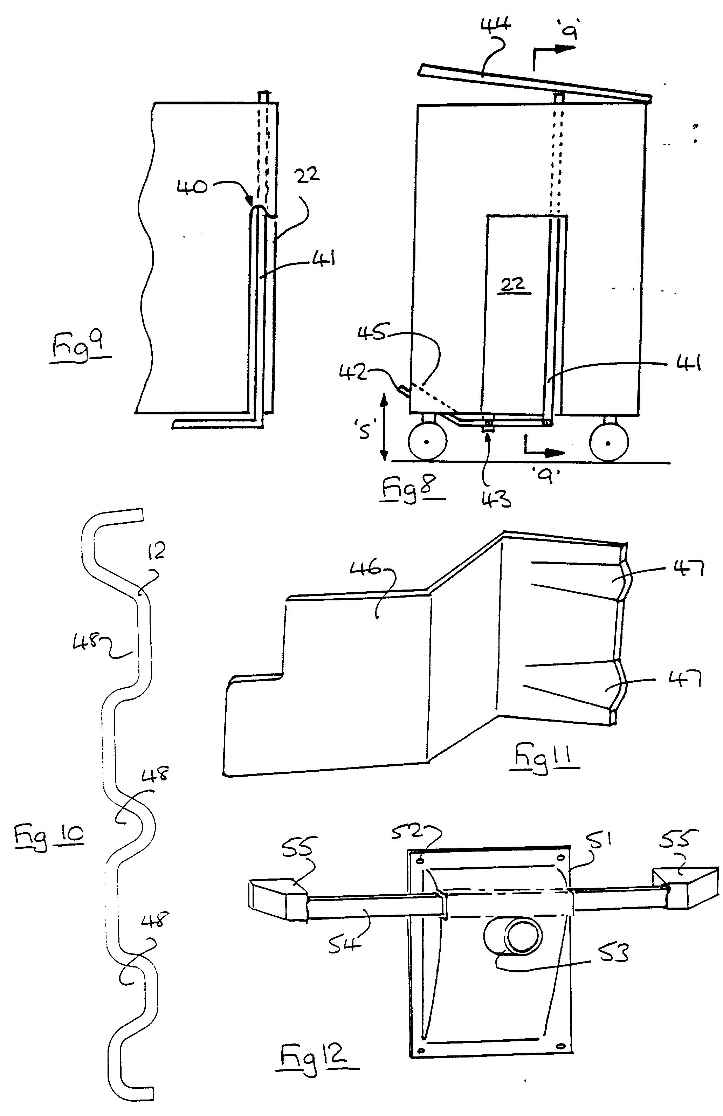

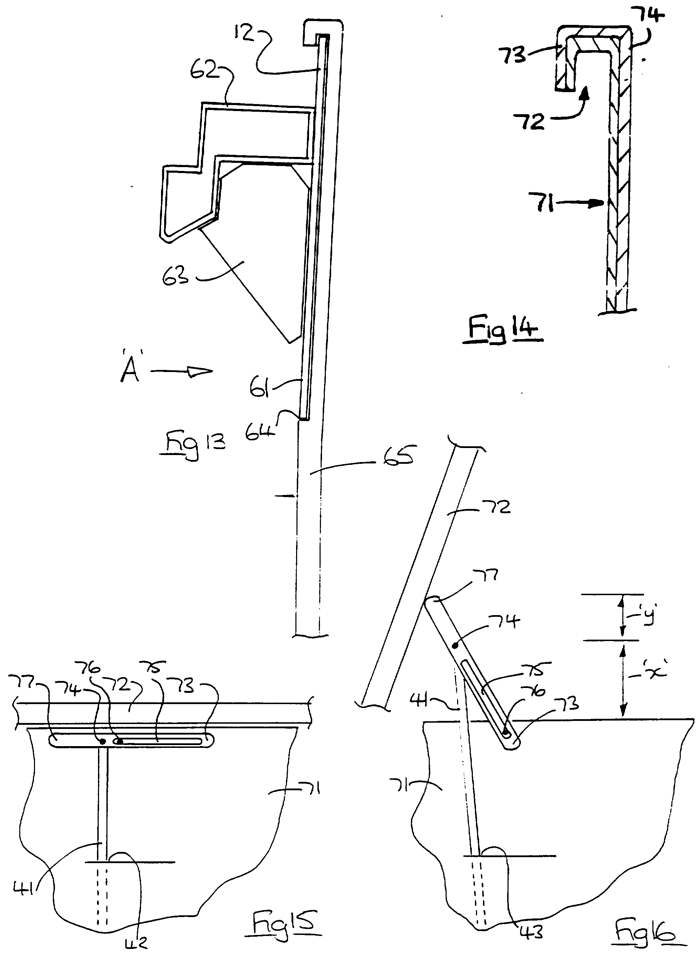

With reference to Figures 1 and 2, a container 10 comprises a moulded plastics bin 11 and a reinforcement hoop 12 for the mouth thereof. The hoop 12 comprises a flat steel strip welded into a continuous ring, and having attached thereto a comb bar 13 which in use is engaged by the comb of a lifting mechanism of a refuse vehicle. Handles 14 are provided for manoeuvring the container. The comb bar and handles are of steel and attached to the hoop by welding.

Wheels are attached through the base of the bin in any suitable manner and may include simple planar load spreading or reinforcement plates.

Figure 3 is a scrap section showing the bin 11 having a smooth external lip 15 over which refuse can be loaded or discharge. The wall of the bin includes a peripheral recess defined by the lip 15 and a ledge 16 into which the hoop 12 is located. Clearances are exaggerated in the drawing for the purposes of illustration, but in use lifting loads are transmitted from the hoop to the underside of the lip 15. Reverse loads generated during emptying of the bin or when placing the bin on the ground are transmitted through the ledge 16. In practice the hoop will be a relatively tight fit in the recess, and the outer profile of the ledge may be radiussed or tapered to facilitate snap fitting of a hoop in the form of a continuous ring.

Figure 4 illustrates an alternative for a bin having a planar front face in the vicinity of the lip 15. A series of spaced projections 31 having a tapered leading edge allow snap fitting of the hoop from below, and against the tip 15, or other upper abutment. Fasteners 32 of any suitable type secure the hoop in place.

Hinges for a lid (not shown) may be attached to the rear edge of the hoop. e.g. by welding, and such hinges may provide crash protection from the rear. External flanges of a split hoop may also face to the rear and provide a crash bumper.

As illustrated in Figures 1 and 2. depending flanges 17 of the comb bar may provide additional support, secured by suitable fasteners 32. These flanges 17 may optionally be located in corresponding recesses of the bin wall.

Holes 18 for conventional fasteners are illustrated in the hoop 12 and depending flanges 16.

The walls of the bin have a reinforcement pattern to prevent distortion thereof, and to increase rigidity. This reinforcement pattern advantageously coincides with recesses to accommodate elements attached to the bin. The reinforcement pattern may also include circumferential steps.

A second embodiment is illustrated in Figures 4 and 5. This embodiment is similar to the first embodiment, but includes trunnion mountings 19 attached to the hoop by depending straps 20. Hooks 21 under the trunnions 19 engage in corresponding moulded recesses 22 of the bin to provide a further surface for the distribution of lifting loads, and location against spreading. The hooks 21 may be omitted in certain embodiments, and replaced by suitable fasteners passing through the bin wall.

Clearly the second embodiment also permits assembly of a hoop to a bin from below, as previously explained.

As an alternative, the hoop may be fabricated in sections bolted together. Figure 7 illustrates a two-part hoop consisting of a fore portion 33 extending around the front and two sides of the bin, and terminating in an out turned flange part way along the rear side. A straight rear portion 34 also has an out turned flange at either end, and bolts to the fore portion to complete the hoop. The size of the hoop can be slightly adjusted by shimming at the joins, or alternatively different lengths of rear portion 34 can be provided. As illustrated hinge plates 35 are sandwiched at the joins, thus providing a very convenient and low cost mounting for the usual hinged lid. The hinge plates 35 or the out turned flanges may also act as rear bumpers for the container.

The container according to the invention can be assembled easily and quickly by unskilled labour. Thus the transport of unassembled container components in bulk is facilitated. In particular the bins can be nested without damage, and transported separately to other container parts for assembly at the place of intended use. Local supply of components, such as wheels, is thus facilitated.

Figures 8 and 9 illustrate a preferred arrangement of a treadle mechanism, and a convenient handhold.

As illustrated in Figure 1, a recess 22 provides an anchorage for hooks 21. The recess may also provide a convenient handhold 40, as illustrated in the sectional view of Figure 9; this handhold may enable separate handles to be omitted in certain embodiments.

The recess also provides protection for the connecting rod 41 of a treadle bar 42 pivoted to the underside of the container at 43. Downwards movement of the treadle bar lifts the lid 44 to some extent, thereby making it easier for a user to grasp. The lower portion of the connecting rod is housed within the recess and is thus protected from contact damage, and also from being caught on external projections. At mid height the connecting rod passes through an aperture into the container and thence to the underside of the lid. A cover (not shown) shields the connecting rod inside the container. The arrangement avoids piercing the container at a low level, thus avoiding loss of fluids, but permits the connecting rod to be straight and hence mechanically efficient.

The treadle bar 42 is itself located across the mid portion of the container between the wheels. As illustrated, this portion of the container has an angled wall 45 to permit the treadle bar to have a high initial position, and thus an increased stroke S. This arrangement maximises the stroke of the connecting rod 41 for a given lever ratio.

Figure 10 illustrates that the hoop is preferably somewhat serpentine in section. This improves stiffness. and permits some asymmetry which assists in orientation. The recesses also provide a register for attachments to the hoop, for example the cheek piece 46, illustrated in Figures 11 and 2. As illustrated, the dimples 47 of the cheek piece are intended for location in the lower recesses 48 of the section illustrated in Figure 10.

The hoop section illustrated in Figure 10 preferably has three recesses 48 facing to the outside, the upper recess defining a surface for fixing to the container body by for example structural rivets.

Figure 12 illustrates an alternative arrangement for the trunnion mounting provided at either side of the bar in certain configurations. Such a mounting is also illustrated in Figure 1.

In the embodiment of Figure 12, a dished metal pressing 51 is adapted for attachment to the container body by structural rivets 52. A circular aperture in the dished surface receives a tube 53 which comprises the trunnion member. Apertures in the side of the dished surface closely receive a single length of a hollow bar 54, which is rectangular in this embodiment.

The ends of the bar 54 are housed in moulded plastic end caps 55 which are also adapted for fixing through the container body, by, for example, screws or rivets.

The bar 54, pressing 51 and tube 53 are welded together on the inside of the pressing to provide a rigid unitary assembly, the trunnion tube 53 bearing on the underside of the bar 54 for transfer of a portion of the load of the container. The bar has the additional function of providing a convenient grab handle for manoeuvring the container.

Figure 13 illustrates a bumper plate for the front of the container body. With reference to Figure 4 depending flanges 17 are provided for support. These flanges may alternatively be constituted by a single metal strip 61 extending across the full face of the container to approximately the same depth as the flanges 17. This strip 17 constitutes a bumper to resist loads applied by teeth of a comb in the direction of arrow A as the comb is manoeuvred under the comb bar 62 in order to lift the container.

The depth of the strip can be chose to suit the intended duty of the container, but as illustrated extends just below the usual gussets 63. The strip may be housed in a recess 64 of the container body 65 in order to prevent the comb teeth from catching under the lower edge of the strip 61 rather than engaging the comb bar 62. The strip 61 also provides additional locations for fasteners 32 should they be necessary. The strips 61 may conveniently be welded to the base of the hoop section of Figure 10, though for the purposes of illustration Figure 13 shows a plain flat hoop 12 and integral bumper.

Figure 14 illustrates a scrap section through the upper front edge of a container body 71, showing the lip 72 engageable over a hoop 12. The body 71 has inner and outer layers 73, 74. The outer layer comprises a suitable plastics material having a colour pigment to suit the livery of the end user. The inner layer is of similar material, and has a less expensive pigment, such as carbon black.

The inner layer may include a perfume, an anti-friction additive and/or an anti-bacterial substance.

This two layer construction confines the necessary pigment or additive only to the area of need, thus reducing the cost compared with treatment through the entire wall thickness.

The two layer construction can be achieved by rotational moulding with a two-state charge.

Figs. 15 and 16 show an internal view of an end wall 71 of a container having a lid 72 hinged by means not shown to the left. A connecting rod 41, similar to that illustrated in Figs. 8 and 9 passes through an aperture 43 in the wall 71 and is coupled at its upper end to a flat lever 73 by a pivot 74. The lever 73 has a slot 75 guided over a fixed pin 76 protruding from the wall 71. In use the lever 73 is retained in any suitable manner, for example by an enlarged head on the pin 76. The left end 77 of the lever, as viewed, is rounded.

In use a treadle, such as that illustrated in Fig.8, is depressed to lift the rod 41 to the position illustrated in Fig. 16. As a result the lid 72 is pivoted to the open condition by the lever end 77. The arrangement provides increased lift for a given stroke of the rod 41, the rod stroke being represented by dimension 'x' and the lid lift being represented by dimension 'x' + 'y'.

The slot 75 may be curved to give a variable lift ratio, for example high rod travel and relatively low lift as the lid begins to open, and increasing lift for equivalent rod travel as the lid approaches the fully open condition. The specific arrangement describes a slot 75and pin 76 but other types of cam/follower arrangement may be suitable.

## Claims

1. A composite container (10) comprising an open bin (11) of plastics material, a hoop (12) of metal around the mouth thereof, and a lifting formation (12) of the container on said hoop.

2. A container according to claim 1 wherein said hoop (12) is external.

3. A container according to claim 2 wherein said container (10) includes an external rim (15) around the mouth thereof, and under which said hoop (12) is engaged.

4. A container according to claim 3 wherein said rim (15) defines a substantially continuous peripheral recess into which said hoop (12) is engaged.

5. A container according to claim 4 wherein said hoop (12) is engaged in said recess in the manner of a snap fitting.

6. A container according to any preceding claim wherein said hoop (12) is a continuous ring.

7. A container according to any preceding claim wherein said hoop (12) comprises a broken ring, the free ends being joined by fastening means to form a closed ring in use.

8. A container according to claim 7 wherein said ring comprises two parts.

9. A container according to claim 8 wherein one part of said ring extends between two hinge mountings of a lid for said bin.

10. A container according to claim 9 wherein said hoop (12) further includes a comb bar at one side thereof, the comb bar having a depending bumper adapted to be engaged by the comb of lifting apparatus.
